**Europäisches Patentamt**

(19) **European Patent Office**

**Office européen des brevets**

(11) Publication number: **0 046 798**
**B1**

(12) **EUROPEAN PATENT SPECIFICATION**

(45) Date of publication of patent specification: **08.06.88**

(21) Application number: **81900783.2**

(22) Date of filing: **25.02.81**

(86) International application number:
**PCT/US81/00227**

(87) International publication number:
**WO 81/02499 03.09.81 Gazette 81/21**

(51) Int. Cl.⁴: **H 04 N 7/16,** H 04 K 1/04

(54) METHOD AND SYSTEM FOR SECURE TRANSMISSION AND RECEPTION OF VIDEO INFORMATION PARTICULARLY FOR TELEVISION.

(30) Priority: **25.02.80 US 124656**

(43) Date of publication of application:
**10.03.82 Bulletin 82/10**

(45) Publication of the grant of the patent:
**08.06.88 Bulletin 88/23**

(84) Designated Contracting States:
**AT CH DE FR GB LI LU NL SE**

(56) References cited:
**US-A-2 972 008
US-A-4 070 693**

(73) Proprietor: **TELEASE INC.**
**1900 Avenue of the Stars Suite 950
Los Angeles, CA 90067 (US)**

(72) Inventor: **BLOCK, Robert S.
13044 Mindanao Way 5
Marina Del Ray, CA 90291 (US)**
Inventor: **MARTIN, John R.
2345 W. Mill Road
Milwaukee, WI 53209 (US)**

(74) Representative: **Needle, Jacqueline et al
PAGE, WHITE & FARRER
5 Plough Place New Fetter Lane
London EC4A 1HY (GB)**

Courier Press, Leamington Spa, England.

## Description

The present invention relates to a method and apparatus of secure transmission of a video signal. For example, the method can be used for the secure transmission of television signals for subscription television or similar video services in which only authorized viewers are permitted to view a video program.

With the increased interest and activity in the field of subscription or pay video transmission of all types (e.g., broadcast and cable subscription television, long distance satellite transmission, television transmission of textual information, etc.), there has arisen a need for more secure transmission of high quality video information. To this end, numerous video encoding or scrambling techniques have been developed and some are now in use, particularly in broadcast systems where there is no control over who receives the signals and thus the signals must be encoded to prevent unauthorised use of the received signals.

One broadcast subscription television system now in use in Los Angeles, California, U.S.A. transmits a video signal that has been modulated by a sine wave signal such that the blanking and synchronizing levels cannot be recognized by a normal television receiver. The display, without decoding, is thus unintelligible or at least very annoying to a viewer. However, it has been reported that by rather simple means available in most electronics stores, the system may be readily defeated by non-subscribers. As this becomes more widely known to the public, the number of unauthorized viewers grows and the incentive to pay for the services diminishes. This, in turn, detracts from the desirability on the part of video program producers to permit the use of their programming, particularly if they are paid as a function of authorized viewers or revenues collected.

Other approaches to television signal scrambling have proven more secure and may, in fact, make it practically impossible to unscramble the video signals without highly sophisticated and extremely expensive equipment. One such approach is to invert lines or fields of video information on some basis that can be reproduced at the subscriber location to permit viewing of a normal picture. Thus, for example, one known system inverts alternate parts of the video information and a decoder at the subscriber location can reinvert those inverted positions to reconstitute the original video. Another known system inverts fields of video information on a random basis and sends a code with the scrambled video to instruct the decoder as to how the received video has been inverted.

Security tends to be adequate in approaches to video scrambling in which the video information is randomly inverted and a secure code is transmitted with the video so that the decoder can properly reinvert, but difficulties arise with respect to picture quality. For example, inversion and reinversion of video signals may result in a reconstituted video signal that varies in d.c. level from line-to-line or field-to-field. Because of this variation, a flicker or other annoying effect appears in the television display making it unpleasant for viewing.

Various measures have been employed to eliminate or at least reduce this problem with varying degrees of success. Clamping the video signals to the same d.c. level has been somewhat successful, but some annoying effects may still remain. Also, the additional circuitry required to eliminate or reduce the annoying effects of these types of scrambling add cost and complexity to the decoders. Less expensive and perhaps more effective approaches, such as less frequent inversion, have been suggested, but they seem to have a tendency to reduce the security of transmission and only serve to reduce the annoyance, not eliminate it.

US—A—4,070,693 describes a method for providing secure transmission of a video signal having a plurality of parts arranged in a first predetermined sequence, comprising the steps of sequentially storing parts of the video signal in a first storage location, retrieving the stored parts in a sequence other than said first predetermined sequence to form an encoded video signal having parts rearranged in sequence relative to said first predetermined sequence in a determinable manner, and transmitting the encoded video signal.

In this known system, one part of a line of video information is interchanged with another part of the same line to encode the video signal. Thus, to decode it is only necessary to determine the initial point of a line of video information.

The present invention seeks to provide a secure transmission method for a video signal which is more secure than this known system.

According to the present invention, a method of providing secure transmission of a video signal as defined above is characterised in that the stored parts are simultaneously transferred to a second storage location, and in that the stored parts are retrieved from said second storage location.

Although the method of the invention has an extremely high amount of security in that the encoding is sufficient to render an encoded television signal unintelligible or at least extremely annoying to watch, the decoded video signal is devoid of annoying abnormalities introduced during encoding, yet no special efforts must be made to eliminate encoding abnormalities.

In an embodiment of the invention, rearrangement of the sequence of video signal parts is accomplished on a line basis or a field basis. For example, several lines of a video signal are stored in order as they are received. However, the lines are retrieved in a sequence different from that in which they are received and stored. Similarly, several fields of the video signal may be stored and retrieved in a sequence different from that in which they are received. Of course, in the above-discussed embodiments, the rearrangement can be accomplished by the manner of retrieval or the manner of storage.

The parts of the video signal chosen for delay may be sequential samples or segments of the video signal either in an analog or digital form. The sequence of the samples is rearranged by delaying some longer than others, either individually or in groups, preferably by storing the samples sequentially as they are received and then retrieving the stored samples in a sequence other than that of receipt, or by storing the samples in a sequence other than the one in which they are received and then retrieving the stored samples in the stored sequence.

The invention also extends to apparatus for providing secure transmission of a video signal comprising means for generating a video signal having a plurality of parts arranged in a first predetermined sequence, first storage means for sequentially storing parts of the video signal; means for retrieving the stored parts in a sequence other than said first predetermined sequence to form an encoded video signal having parts rearranged in sequence relative to said first predetermined sequence in a determinable manner; and means for transmitting the encoded video signal, characterised in that the apparatus further comprises

second storage means for sequentially storing the stored parts, means for simultaneously transferring the stored parts in said first storage means to said second storage means, and means for retrieving the stored parts from said second storage means.

In one embodiment, a predetermined portion of part of the video signal (e.g. a horizontal line) is stored in the first storage means and is then transferred to the second storage means. Before the portion of the video signal is stored in the second storage means, it is altered (e.g. by a gating arrangement), and the altered video signal is transmitted from the second storage means.

For example, a first group of samples representing one horizontal line of video (e.g., 256 segments which together constitute one line of video information) is serially stored in sequence in a serial-in/parallel-out storage device. This storage device may be a binary shift register if the samples are digital representations of the video, or an analog "bucket brigade" if the samples are analog representations of the video. When one full line of samples or video segments is stored, the segments are shifted in parallel into a second parallel-in/serial-out storage device so that the first storage device can accept the samples of the next line of video while the first stored segments are retrieved from the second storage device for transmission.

Rearrangement of the segments prior to transmission may be accomplished in various ways. The contents of the first storage device may be transferred to the second storage device without rearranging the sequence of samples. The stored samples in the second storage device then may be shifted out for transmission in a sequence rearranged in relation to their original sequence of storage in a determinable manner. For example, the samples may be shifted out so that the last received appears first in the transmitted signal or so that some intermediate sample appears first in the transmitted signal. An encoded video signal comprising a line of video having parts rearranged in sequence relative to corresponding parts of the normal video signal is thus transmitted.

Another way of rearranging segments prior to transmission is to transfer the contents of the first storage device into the second storage device in a sequence rearranged in relation to the original sequence of storage in a determinable manner. The contents of the second storage device are then shifted out in sequence resulting in an encoded video signal having parts of a line of video signal rearranged relative to corresponding parts of the normal video signal. This form of the invention permits any sample along a line to be rearranged to any position along that line or, with additional storage capacity, along any other line.

Since, in each embodiment of an encoder, the video parts are altered such as by rearrangement of sequence in a determinable manner (either fixed or variable), a decoder which performs an opposite type of rearrangement will reconstitute the original, viewable form of the video signal. The manner of rearranging the sequence of parts may be predetermined (i.e., fixed or preset) or may be controlled by a code generator that can vary the sequence from line-to-line or from field-to-field or on any other convenient time basis. The code produced by the code generator can be wholly or partially transmitted with the encoded video signal, e.g., in the horizontal or vertical retrace intervals, so that the exact nature of the rearrangement of parts can be determined by a decoder at a subscriber's location so that the original sequence of parts can be there reconstituted.

The code that determines the sequence of delay or rearrangement may change in a random manner and be transmitted in its entirety with the encoded video signal. A decoder at the subscriber location receives the code and reverses the delay procedure at the transmitting station in order to place the parts of the video signal in their normal sequence.

Alternatively, the code that determines the sequence of delay or rearrangement may be predetermined and be only periodically changed, e.g., on a monthly basis. The new code is provided to the subscriber prior to the start of each month so that the subscriber's decoder can properly rearrange the parts of the encoded video signal and thus display a normal television picture. The code itself may also be ciphered so that a combination of the above techniques can be used. Thus, for example, the code that is needed for rearranging the encoded video signal may be itself changed in a predetermined manner before transmission. The manner in which it is changed may be communicated to a subscriber on a monthly basis

3

so that the subscriber's decoder can only use the transmitted code properly if the encipher code is also known.

Embodiments of the present invention will hereinafter be described, by way of example, with reference to the accompanying drawings, in which:

Figures 1A and 1B are illustrations of standard United States color television signals;

Figures 1C and 1D are pictorial representations of the scanning of two successive fields of video information on a television picture tube in response to the signals of Figures 1A and 1B;

Figures 2—6 are pictorial representations of a standard television picture tube with lines scanned with encoded signals;

Figures 7 and 8 are functional block diagrams of embodiments of encoders in which lines of video information are rearranged;

Figure 9 is a more detailed functional block diagram of an encode control circuit incorporated in the encoder illustrated in Figure 8;

Figure 10 is a functional block diagram illustrating a gate circuit incorporated in the encoder illustrated in Figure 8;

Figure 11 is a functional block diagram illustrating an embodiment of an encoder in which lines of the video signal are encoded upon initial storage; and

Figure 12 is a functional block diagram illustrating an encoding station and a decoding station.

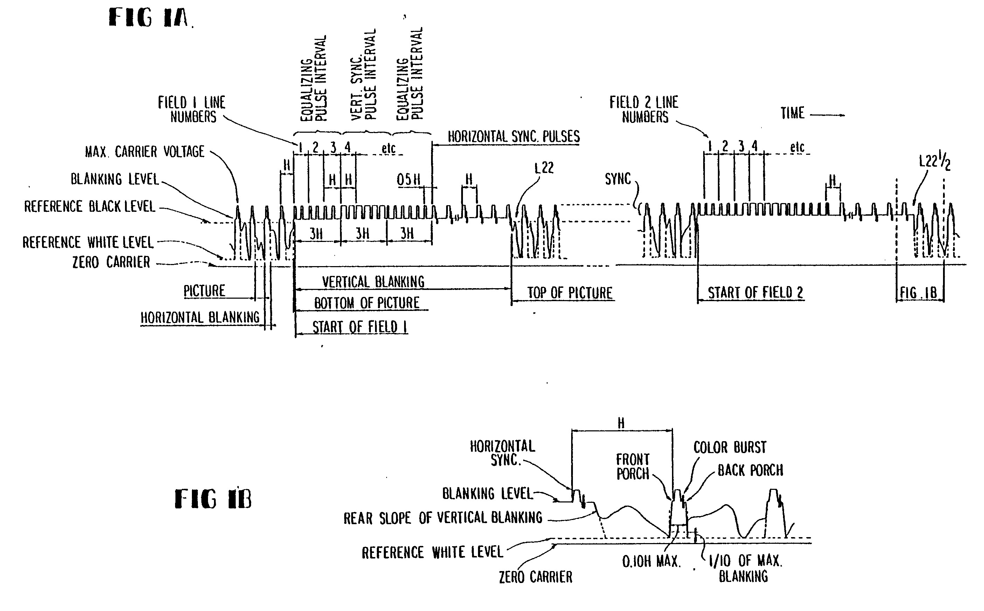

Figures 1A and 1B illustrate a standard or normal color television signal before it is superimposed on a carrier for transmission (or after demodulation).

This illustrated signal is the standard for the United States but it should be noted that the "standard or normal" television signal for other countries may differ somewhat. Accordingly, Figures 1A and 1B are illustrative of only one of a possible number of standard signals. As is illustrated in Figure 1A, the standard color television signal is composed of consecutive fields each including synchronizing signals and video signals which convey color and "contrast" information. Each field commences with a vertical blanking interval comprised of equalizing pulses, vertical synchronization pulses and horizontal synchronization pulses. At the TV receiver, this vertical blanking interval (i.e. the blanking pulse) blanks the cathode ray tube beam as it is returned from the bottom to the top of the display (TV screen), and the horizontal scanning circuits are stabilized in synchronization with the horizontal sync pulses prior to the arrival of the first horizontal line of video information.

At the end of the vertical blanking interval, a horizontal sync pulse signifies the start of the scanning of a line of video information from one edge of the television display or picture tube to the other edge, normally from left to right when viewed from the front of the picture tube. The video signal information modulates the electron beam (or electron beams in a color system) as the beam is scanned. A horizontal blanking pulse blanks the retrace of the electron beam from right to left and a horizontal sync pulse then signifies the start of the next line of video information. Two consecutive lines of video information (actually $1\frac{1}{2}$ consecutive lines of a second field of video information) are shown in Figure 1B.

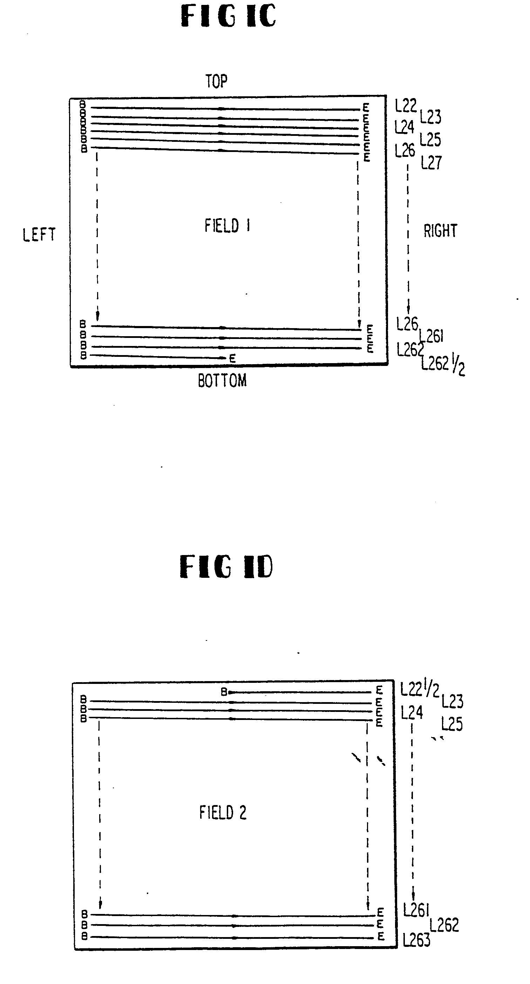

The result of scanning two consecutive fields of video information as seen by a viewer on the face of the picture tube is illustrated in Figures 1C and 1D. As can be seen in Figure 1C, the face of the cathode ray picture tube is scanned with video information starting at the top left and ending at the bottom right of the display. Since the first 21 horizontal sync pulses are used to stabilize the horizontal sync circuits during vertical blanking, the first visible scan line of the first field is line 22(L22). Moreover, in the first field, for purposes of interlacing with the second field, the last line scanned is a half line. Thus, the first field can be viewed as containing lines 22 through $262\frac{1}{2}$ to facilitate the description. The second field is similar except that for the purpose of interlacing the very first line scanned is a half line and the last line is a whole line. Thus, the second field can be viewed as containing lines $22\frac{1}{2}$ through 263. In Figures 1C and 1D, the beginning and end of each horizontal scan line is designated B and E, respectively, again to facilitate an understanding of the present invention.

In accordance with the invention, the normal TV video signal is encoded or scrambled such that if the encoded signal were displayed by a standard television receiver without decoding, the resultant picture presented to the viewer would have parts rearranged in sequence relative to their normal positions in the scanning sequence. The parts that are rearranged may be individual scan lines (e.g., the sequence of scan lines in a field) the fields, or other parts of the video signal such as individual segments of a scan line. As will be appreciated this rearrangement of sequence of video signal parts will result in a picture that is unintelligible or at least very annoying to watch.

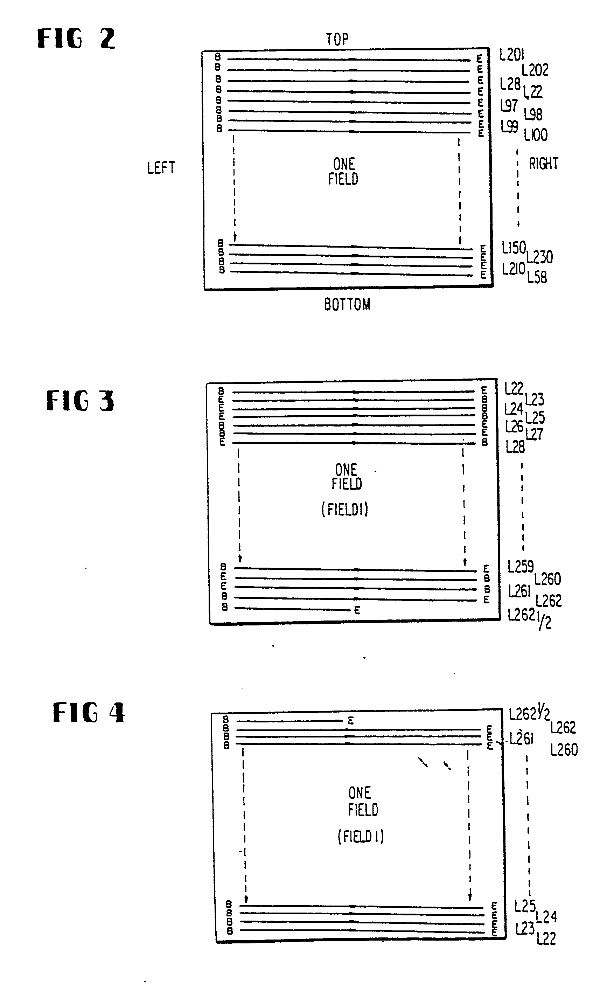

To facilitate an understanding of the invention, the manner in which video information, encoded in accordance with the present invention, would be presented on a TV display without proper decoding is illustrated in Figures 2—6.

Figure 2 generally illustrates one display resulting from the encoding technique of the present invention in which the sequence of individual horizontal lines of video information is rearranged in a determinable manner relative to the normal sequence of lines in a field of video information. Normally, the first line appearing at the top of the video display would be line 22 (or $22\frac{1}{2}$) and the last line would be $26\frac{1}{2}$ (or 263). In one embodiment of the invention described hereinafter in greater detail, the individual horizontal lines are rearranged so that if they were displayed without decoding, they would appear in a sequence other than the normal sequence. Thus, for example, line 201 (L201) would be scanned first at the top of the TV display. This would be followed in sequence by line 202, line 28, line 22, etc., as illustrated in Figure 2. The resultant display would thus be unintelligible unless the lines were rearranged to their normal sequence prior to display.

Figure 3 illustrates the display resulting from encoding in accordance with another form of the invention. In Figure 3, the lines are scanned in their normal sequence, i.e., each horizontal line of video is transmitted and received in its normal order, but the video signal or information content of selected horizontal lines is reversed in a determinable manner so that the video information normally appearing at the end of the line is first and thus appears at the beginning of the line. The selected lines therefore appear on the display as being reversed and when intermixed with normally scanned lines produces a scrambled, unintelligible display unless selective reversal is effected prior to display.

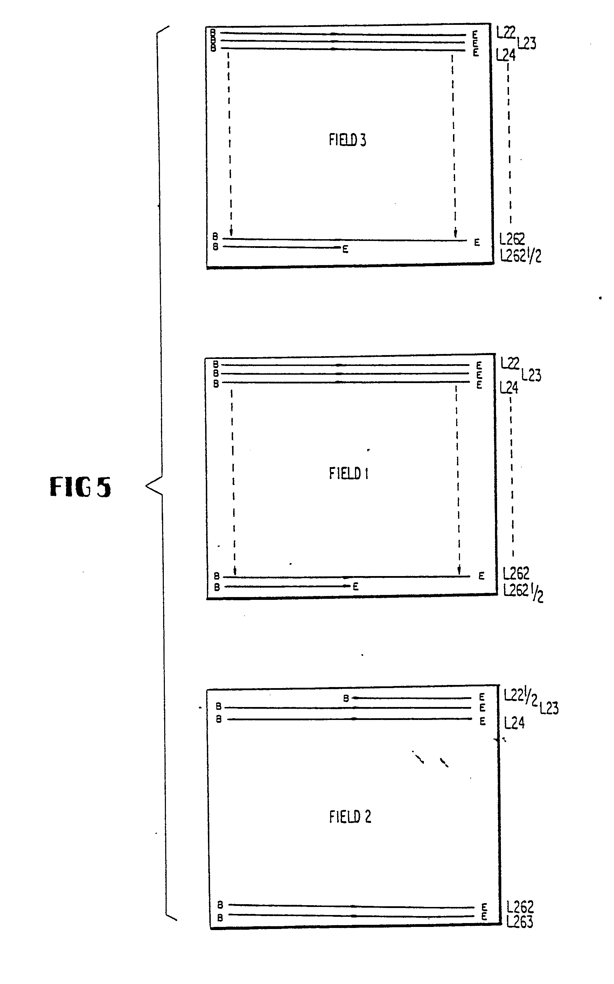

Figure 5 illustrates a further form of the invention wherein the sequence of scan lines of video information is normal but the order of the fields is rearranged. More specifically, an entire field of information is transmitted out of order relative to its normal sequence so that, for example, the third field is received and displayed prior to the first field and the second field. Rearrangement of fields in this manner may encompass a number of fields in any desired rearrangement as will subsequently be described in greater detail.

It will be appreciated from the foregoing and subsequent description that other rearrangements of parts of the video signal may be employed to encode the television signal. For example, combinations of line reversal and field reversal may be employed either together or on an alternating basis. Moreover, smaller parts of the video signal such as portions of horizontal lines may be rearranged to encode the TV video.

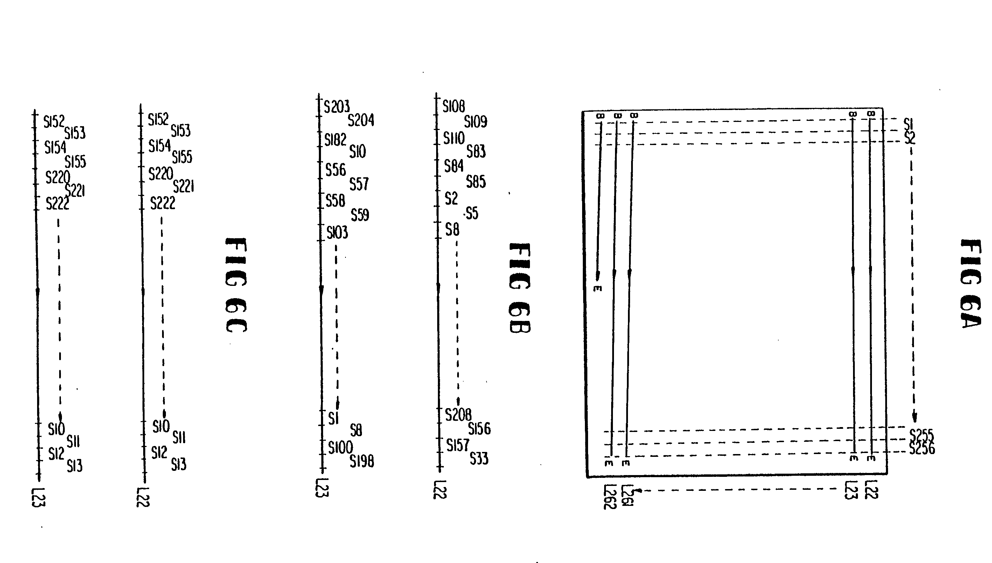

Figure 6A, for example, illustrates a normal television display with the individual horizontal scan lines divided into a plurality of segments, i.e., 256 segments in the illustrated example. The individual horizontal lines are not normally segmented in this fashion can be readily segmented by suitable analog or digital sampling techniques as will be described hereinafter in greater detail. The sampling that is accomplished will provide the segments in a predetermined order and if this order is maintained throughout transmission and reception, the display will be that of an ordinary television signal. However, in accordance with one embodiment of the present invention, the segments are rearranged relative to their normal order prior to broadcast or other transmission as is illustrated in Figures 6B and 6C.

One manner of rearranging the segments shown in Figure 6B provides for the rearrangement of segments in a different fashion for each scan line. As is shown in Figure 6C, however, the rearrangement of the segments of the horizontal line can be maintained, once established for the first scan line, throughout any number of scan lines including all the lines that make up one or more fields.

All of the foregoing encoding techniques illustrated in Figures 2—6 involve the delay of some part of a video signal relative to other similar parts so that the various parts are rearranged in sequence upon transmission and produce an abnormal display if not properly decoded. Of course, the manner of rearranging the parts is determinable either in the sense that it is fixed (predeterminedly) and can be reversed by a similar fixed decoding technique or in the sense that it varies in response to an identifiable code that is provided to the decoder. According, in either case a decoder operating in a reverse manner can reconstitute the original signal from the rearranged parts.

Moreover, it should be understood that while the normal or standard TV video signal is often thought of as a composite signal comprising both sync signals and video information, the term video signal as used herein refers to the video information that determines picture content and thus is peculiar to a particular line or field, unless it is stated otherwise. Therefore, when rearrangement of a part of the video signal is discussed, it is contemplated that the cync pulses and other television signal components that are not peculiar to any particular line or field are not encompassed by this term. It will, however, be appreciated that these other signal components may also be rearranged for convenience or for other purposes in addition to or in conjunction with the video signal rearrangement contemplated herein without departing from the essential characteristics of this invention.

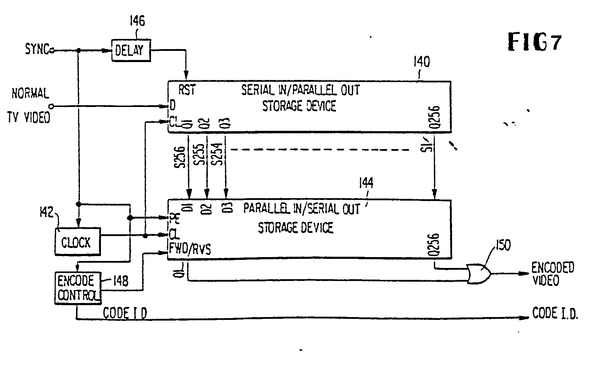

Various embodiments of the invention for delaying and rearranging parts of the video signal are described hereinafter in greater detail in connection with Figures 7—11. In general, the manner of carrying out the present invention involves rearranging the sequence of parts of the normal video signal through the use of a suitable mechanism that will delay the video signal parts in a controllable manner. A storage medium such as a digital memory device, a sample and hold device or like digital or analog storage devices may be arranged to provide such controlled delay.

If the manner of rearranging the video signal sequence is fixed and predetermined, the decoder at a subscriber station need not receive any code information to properly restore the video to its normal sequence. On the other hand, if the video signal sequence is rearranged in response to a code that varies at the transmitter location, this code must be conveyed to the subscriber location. In this regard, the code may be transmitted with the television signal or by way of a separate communication link (e.g., by telephone) or by mail or by a combination of such means. Suitable techniques for supplying code information for unscrambling television signals are described, by way of example, in United States Patents 4,025,948 and 4,068,264.

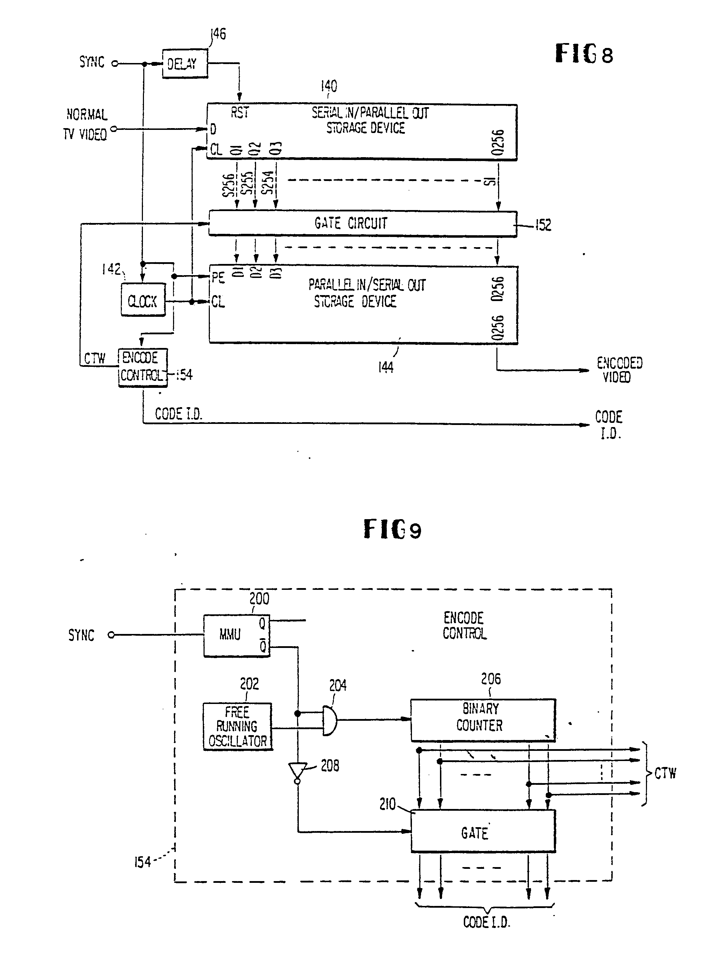

Figs. 7 and 8, illustrate specific implementations of the invention in which the parts of the video signal that are rearranged are segments of horizontal scan lines. In the circuit of Fig. 7, the horizontal line

# 0 046 798

segments are rearranged so that the lines are selectively reversed as shown in Fig. 3. In the Fig. 8 circuit, the segments of a horizontal line of video information are rearranged so that the individual segments within a horizontal line are in other than their normal sequence as shown in Figs. 6B or 6C.

Referring to Fig. 7, the normal TV video signal is supplied to the data input terminal of a suitable conventional serial-in/parallel-out storage device 140. Segments of a horizontal line of video information (e.g., 256 segments or level samples) are stored by serially clocking the segments into the storage device 140 under the control of a clock signal from a conventional synchronized clock 142.

When the segments of one full line of video information are stored in the device 140, the horizontal sync pulse SYNC enables the parallel enable or read terminal PE of a suitable conventional parallel-in/serial-out storage device 144. The SYNC signal is also delayed by a conventional delay circuit 146 and resets the storage device 140 so that it is prepared to receive the next horizontal line of video.

As the next horizontal line of video is received and clocked into the storage device 140, the video information stored in the storage device 144 is clocked out. An encode control circuit 148 provides a forward/reverse signal to the forward/reverse shift input terminal of the storage device 144 and depending upon the value of this signal, the stored video signal is shifted out of the storage device either in a forward direction from the final stage Q256 or in a reverse direction from the first stage Q1. An OR gate circuit 150 is connected to receive the signals from the respective first and final stages Q1 and Q256 of the storage device 144 to provide one or the other as the encoded video signal.

If the encode control circuit 148 applies the forward control signal to the storage device terminal FWD/RVS, the first segment stored (S1) will be clocked out first, followed in sequence by the second through the 256th segments. Thus, the line of video information segments will be identical in sequence to their normal sequence (i.e., their original sequence of storage). If, however, the reverse control signal is applied to the FWD/RVS terminal, the last stored segment of that line of video will be clocked out first, followed by the next to last through the first in sequence. Thus, the reverse control signal will result in transmission of the line of video information in its reverse order (e.g., such as line L23 in Fig. 3).

By changing the foward/reverse signal from one state to the other, the normal and reversed lines can be interspersed in a manner which is determinable by reference to the CODE I.D. signal. This CODE I.D. signal can determine the reversals on a line-by-line basis in some desired fashion (e.g., random or predetermined) or can determine the reversals on a less frequent basis such as on a field-to-field basis by specifying a particular pattern of reversals for an entire field. In either event, transmission of the CODE I.D. signal with the television signal or over some other convenient communication channel will allow decoding of the television video at a subscriber station provided the decoder at that station is capable of responding properly to the received codes.

In Fig. 8, wherein like numerical designations are used to denote like components, the segments that comprise a line of the video signal are stored by the storage device 140 and transferred to the storage device 144 prior to the arrival of the next line. However, the segments are transferred through a gating circuit 152 controlled by a control word CTW from an encode control circuit 154. The control word controls the gate circuit 152 so that the segments S1 through S256 are stored in the storage device 144 in a sequence which is determined by the control word.

Thus, the segments may be stored in the storage device 144 in any sequence, including their original sequence. The stored segments will be clocked out of the storage device 144 by shifting them out in one predetermined direction (or if desired for further encoding, in a selected one of two directions) and the encoded video output signal will thus be a sequence of segments arranged in a determinable pattern other than their original, normal sequence. Again, the CODE I.D. will permit the original sequence to be reconstituted at the subscriber location.

It should be understood that the above techniques for rearranging segmental parts of the video signal may be implemented on an analog or digital basis. For analog operation the storage devices 140 and 144 and the gate circuits 150 and 152 may be any suitable analog devices such as "bucket brigades", gated sample and hold circuits and analog gates of conventional design. Suitable conventional digital AND and OR gates as well as conventional digital shift registers may be used for a digital implementation. Such shift registers and gate components are well known and are readily adapted to the uses described.

In an analog implementation, the video signal may be supplied in its normal analog form and sampled at a desired clock rate to produce the desired number of samples or segments per horizontal line. Reconversion to analog form before transmission will not be necessary, of course.

In a digital implementation, e.g., using binary shift registers, the video signal must first be converted to digital form before storing and rearranging the signal parts. Because of present bandwidth constraints on transmission, however, reconversion to analog form for transmission is desirable. Also, reconversion to analog form for transmission prevents the loss of a digital bit of information that might grossly affect the value of a particular segment upon decoding and display.

It will be understood by those skilled in the art that for digital video manipulation the individual segments of a line must be represented by several digital bits and not just one. For example, each segment may be represented by a four-bit binary word. The registers must thus handle several bits (a multiple bit word) for each segment. Since there is a reconversion to analog form before transmission, these digital words may be handled by conventional parallel data storage techniques. This facilitates keeping track of all the bits for a particular segment and facilitates the conversions from analog to digital and back to analog.

6

# 0 046 798

The gate circuit 152 may be any suitable conventional gating or switching arrangement that responds to the control word CTW to route the segments S1—S256 in variable patterns to the terminals D1—D256 of the storage device 144. One manner in which this may be accomplished is to provide an eight bit control word which will provide up to 256 variations so that each individual segment can be stored in any one of the 256 locations D1—D256 (with provision, of course, that there are no duplications for a particular code). Similarly, a four bit word may be used if, for example, only 16 different storage patterns are desired.

Table I below illustrates one possible coding format where an eight bit code word is used to determine the storage location of the individual segments. The gating circuit in the Table I illustration applies the segments S1—S256 to the respective D256—D1 locations (i.e., without rearrangement) for an all zero's code (00000000) so that the first segment S1 is read out first followed by the second segment S2 and so on, in order, when the storage device 144 is clocked serially. For all one's code (11111111) or the binary equivalent of decimal 255, the gating circuit applies the last segment S256 to the last storage location D256 so that it is read out first when storage device 144 is serially read. For codes between all zero's and all one's (the decimal number 1—254), the segments will be shifted in location in direct proportion to the code value.

TABLE I

| Code (Decimal) | Storage Location | | | | | | |
|---|---|---|---|---|---|---|---|
| | D1 | D2 | D3 | D4 | D5 | .... | D256 |
| 0 | S256 | S255 | S254 | S253 | S252 | .... | S1 |
| 1 | S1 | S256 | S255 | S254 | S253 | .... | S2 |
| 2 | S2 | S1 | S256 | S255 | S254 | .... | S3 |
| 3 | S3 | S2 | S1 | S256 | S255 | .... | S4 |
| . | . | .. | . | . | . | | . |
| . | . | . | . | . | . | | . |
| . | . | . | . | . | . | | . |
| 255 | S255 | S254 | S253 | S252 | S251 | .... | S256 |

Table II below illustrates another possible coding format in which a four bit code word is used to determine the storage locations of the individual segments within one of a possible sixteen patterns (i.e. a four bit word can assume 16 different values). The all zero's code word controls the gate circuit 152 to arrange the segments in the storage device 144 in their original, unaltered sequence as shown in the first line of Table II. The all one's code word (1111), the binary equivalent of decimal number 15, controls the gate circuit 152 to arrange the segments in reverse order in storage device 144. Various other different patterns of storage rearrangement are provided by the code words corresponding to the decimal number 1—14.

TABLE II

| Code (Decimal) | Storage Location | | | | | | |
|---|---|---|---|---|---|---|---|
| | D1 | D2 | D3 | D4 | D5 | .... | D256 |
| 0 | S256 | S255 | S254 | S253 | S252 | .... | S1 |
| 1 | S10 | S105 | S203 | S2 | S8 | .... | S100 |
| 2 | S26 | S123 | S126 | S98 | S215 | .... | S226 |
| . | . | . | . | . | . | | . |
| . | . | . | . | . | . | | . |
| . | . | . | . | . | . | | . |
| 16 | S1 | S2 | S3 | S4 | S5 | .... | S256 |

**0 046 798**

The encode control circuit 154 and the gate circuit 152 may be implemented to provide segment rearrangement using known digital techniques. For example, as is shown in Figure 9, the encode control circuit 154 may be any suitable random or pseudo-random code generator that produces a multiple bit code word during an appropriate time period (e.g. at the end of each horizontal line) to gate the stored video information from one storage device to the other in accordance with a pattern determined by the code.

In this regard, the encode control may comprise a monostable multivibrator 200 which is triggered by an appropriate one of the sync signals, depending upon how often information is transferred. When used in conjunction with the Figure 8, embodiment, the horizontal sync pulse may be used to trigger the multivibrator.

The binary zero output signal Q from the multivibrator controls the gating of pulses from a free running clock 202 through an AND gate 204 to the clock input terminal of a binary counter 206. The multivibrator output signal is also inverted by an inverter 208 and applied to a gate 210. An output signal from each stage of the counter 206 together form the control word CTW and are gated through the gate 210 to form the CODE I.D. signal.

In operation, the multivibrator output signal is normally high or binary ONE and allows the oscillator signal to pass through the AND gate 204. Thus, before a horizontal sync pulse arrives, the counter is freely counting and the control signal CTW is changing.

When the horizontal sync pulse arrives, the multivibrator signal assumes a low signal level for a period determined by the multivibrator time constant. The binary counter 206 no longer receives clock signals so it stops counting and its output stays the same for the duration of the low level or zero multivibrator output signal.

The CTW signal is applied to the gate circuit 152 of Figure 8 and, by choosing appropriate delays, the video information is transferred through the gate circuit while the CTW signal is fixed in value. Also, the CODE I.D. signal is either sampled directly or through the gate 210 for transmission with the encoded video signal.

At the end of the time period of the multivibrator, the Q output signal assumes a high signal level and the counter 206 once again counts pulses from the oscillator. Since no information is being transferred through the gate circuit 152 during this interval, the changes in the CTW signal do not have any adverse affect.

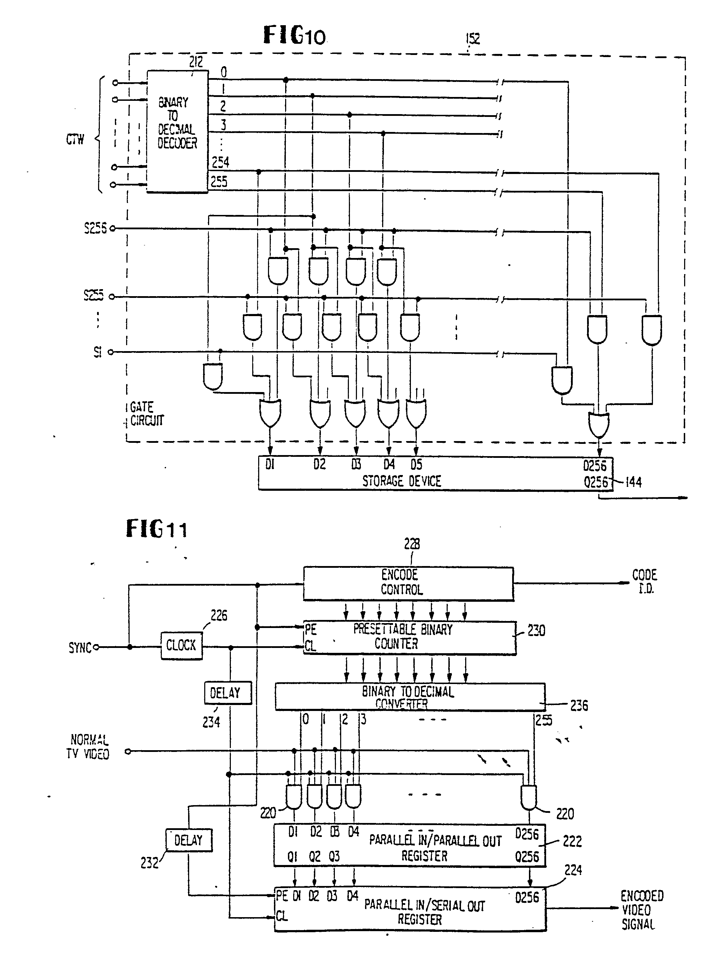

Any suitable gating arrangement that will transfer signals differently between its input and output terminals in response to a control word may be used for the gate circuit 152. One possible arrangement partially shown in Figure 10 permits the input segments S1—S256 to be output on any of the 256 data lines for storage in any of the 256 storage locations D1—D256. It can be seen, for example, that with a conventional binary to decimal decoder 212, up to 256 distinct control signals are provided from an eight bit control word CTW. Using an AND and OR gate arrangement (an expansion of that shown), any input segment can be applied to any data input terminal D1—D256 in accordance with the pattern determined by the gates.

Thus, for example, the segment S256 is applied to terminal D1 when the decoder output signal is decimal "0". Simultaneously, the segments S255—S1 are applied to data terminals D2—D256, respectively for a decimal "0" output signal from the decoder 212. In the illustrated arrangement, a decimal 1 shifts the segments one data terminal to the right, but any other pattern of response to the control word CTW may be readily implemented using such a technique.

Since there is no gating circuit in the embodiment of Figure 7 and only two states of encoding are necessary, it will be appreciated that a very simple circuit such as a controlled bistable flip flop may be used to reverse line retrieval. Moreover, it will be appreciated that with a fixed segment rearrangement pattern, there is no need for an encode control circuit or a gate circuit in the Figure 10 embodiment. Thus, the gating and encoding may be as simple or complex as desired with the limits of the number of segments available for rearrangement.

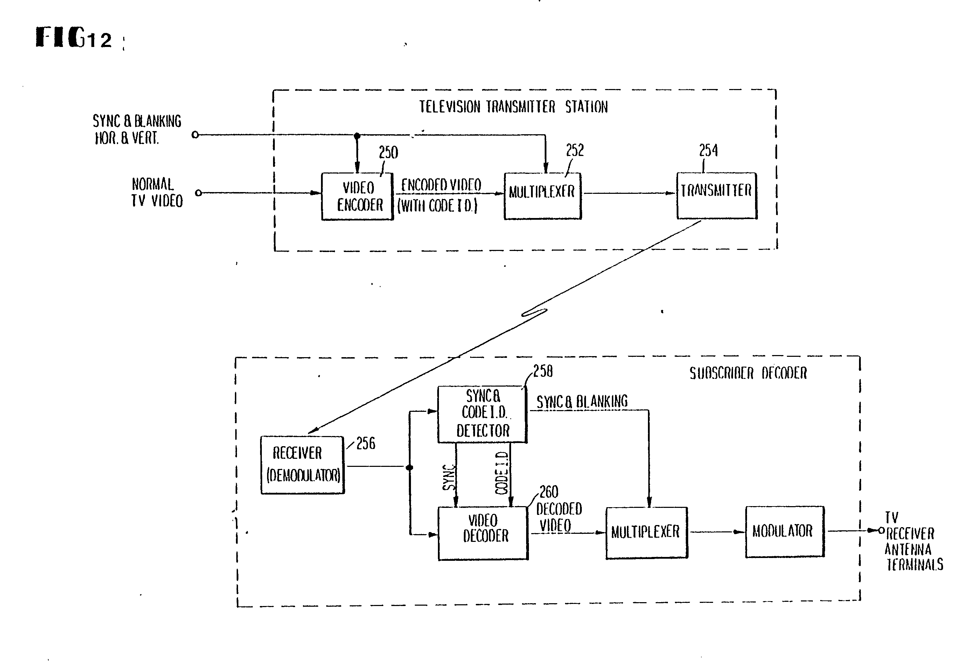

Figure 11 illustrates an embodiment of the invention in which the selected parts (e.g., segments of lines) of the normal TV video signal are stored in the rearranged order desired for transmission. The normal TV video is applied to a plurality of AND gates 220, one for each input terminal D of a suitable conventional parallel-in/parallel-out storage device or register 222. The output terminals Q of the register 222 are connected to corresponding input terminals D of a conventional parallel-in/serial-out storage device or register 224 whose serial output is the encoded video signal.

The parts of the normal TV video signal will be stored in the register 222 at storage locations determined by the sequence of gating of the AND gates 220. One circuit for varying the sequence of storage locations is illustrated in Figure 11. In this regard, the sync signal (e.g., horizontal sync) is applied to a conventional synchronized clock 226, to an encode control 228, to the preset enable input terminal PE of a conventional presettable binary counter 230 and through a delay circuit 232 to the parallel read or enable input terminal PE of the register 224.

The output signal from the clock 226 is supplied to the clock input terminal CL of the counter 230 and through a delay circuit 234 to one input terminal of each of the AND gates 220 and to the clock input terminal of the register 224. The output signals from the counter 230 are applied in parallel to a conventional binary to decimal converter 236 and the 0—255 output signals from the converter 236 are

8

applied to the respective input terminals of the AND gates 220.

In operation, the encode control 228 generates a binary code word (e.g., as previously described in connection with Figure 9), and this binary word is applied to the counter 230 as a preset signal. In the illustrated embodiment the counter 230 is an eight bit counter so the binary word from the encode control is an eight bit word.

The counter 230 is preset by the code word from the encode control 228 at the start of a horizontal line. The counter then counts 256 bits of the clock signal (if 256 video signal parts are to be stored), starting its count at the preset number. During one horizontal line, the output signal from the binary to decimal converter thus steps from the preset number until it arrives at the number before or after the present number, depending on whether the counter 230 counts up or down.

As the counter 236 is stepped from the preset number through all its other outputs, the AND gates 220 are enabled in a corresponding sequence, one at a time. As an AND gate is enabled, the video signal present at that time is stored in the location in the register 222 connected to that AND gate. At the end of a horizontal line, the stored line of video is shifted into the register 224 and is clocked out of this register for transmission as the encoded video signal while the next line of video is stored in the register 222. The code I.D. signal can also be transmitted with this encoded video signal as often as is necessary (depending on how often it is changed).

Figure 12 illustrates an overall pay television system which may be constituted in accordance with the present invention. Of course, it will be appreciated that other secure video systems (e.g., "teletext" CATV or satellite) may also be operated in accordance with the techniques, and with the apparatus, described herein.

Referring to Figure 12, the synchronizing and blanking signals as well as the normal TV video signal are provided to a video encoder 250 such as one of the previously disclosed encoders. The sync and blanking signals are also provided to a suitable conventional multiplexer 252 together with the encoded video signal and code I.D. from the video encoder 250.

The multiplexed signal from the multiplexer 252 is supplied to a suitable conventional transmitter 254 which broadcasts the multiplexed signal at a suitable carrier frequency. This transmitted signal is received by the subscriber decoder and is demodulated by a conventional receiver/demodulator 256. The output from the receiver 256 is thus the encoded video signal with the code I.D. and the sync and blanking signals at appropriate locations in the demodulated signal.

A sync and code I.D. detector 258 detects the sync and blanking signals as well as the code I.D. signal in the demodulated video stream. Conventional television sync and blanking circuits may be utilized for detection of the sync and blanking signals, and since the code I.D. signals are in the received signal at known locations relative to the sync and blanking signals, the code I.D. may be detected in any conventional manner such as in conventional television scrambling and unscrambling systems.

The demodulated video stream from the receiver 256 is also supplied to a video decoder 260 together with the detected sync and code I.D. signals. The video decoder reconstitutes the normal video TV signal in response to the sync and code I.D. signals reversing the encoding process that was performed at the television transmitter station. In this regard, if the encoder of the Figure 10 embodiment is used to encode the video signal at the transmitter station, then an identical decoder may be used at the subscriber station.

For example, the detected sync signal would be applied to the input terminal labeled "SYNC" in Figure 8 and the demodulated (encoded) video from the receiver 256 would be applied to the terminal labelled "NORMAL TV VIDEO" in Figure 8. The detected code I.D. would be applied to the gate circuit 152 as the control word CTW or to a suitable decoder, if necessary, to form a suitable control word that will reverse the previous encoding process.

It will be appreciated that, in the Figure 12 embodiment, the sync and blanking signals are not encoded but, rather, are multiplexed with the encoded video signal from transmission in their normal form. Depending upon the manner in which the video signal parts are rearranged, this form of sync and blanking signal transmission may or may not be desirable.

Moreover, it should be noted that the Code I.D. may be supplied to the subscriber decoder in some manner other than in real time with the transmitted signal. For example, the code I.D. may be fixed for an entire program or for a series of programs or for a predetermined time period. This code I.D. may be set by the subscriber (e.g., upon receipt each month of a decoding schedule from the subscription TV operator) or may be transmitted to the decoder as a block of information covering a predetermined time interval, with the transmission being effected either over the air or by telephone.

**Claims**

1. A method for providing secure transmission of a video signal having a plurality of parts arranged in a first predetermined sequence, comprising the steps of sequentially storing parts of the video signal in a first storage location (140), retrieving the stored parts in a sequence other than said first predetermined sequence to form an encoded video signal having parts rearranged in sequence relative to said first predetermined sequence in a determinable manner, and transmitting the encoded video signal, characterised in that the stored parts are simultaneously transferred to a second storage location (144), and in that the stored parts are retrieved from said second storage location (144).

2. A method as claimed in claim 1, wherein the sequence of the stored parts is rearranged by transferring the stored parts from the first storage location (140) to said second storage location (144) in such a manner that the sequence of the stored parts in said second location (144) differs in a selectable manner from the sequence of the stored parts in said first location (140), and wherein the stored parts are retrieved from the second storage location (144) in sequence.

3. A method as claimed in claim 1, wherein the sequence of the stored parts is rearranged by transferring the stored parts from the first storage location (140) to the second storage location (144) in said first predetermined sequence, and then retrieving the stored parts from the second storage location (144) in a selectably variable sequence.

4. A method as claimed in Claim 1, wherein the sequence of the parts of the video signal are rearranged by storing the parts in said first storage location (140) in a selectively variable sequence other than said first predetermined sequence.

5. A method as claimed in any preceding claim, further comprising generating a code signal (CODE I.D.) identifying the manner in which the parts of said encoded video signal are rearranged in relation to said first predetermined sequence, and transmitting at least a portion of the code signal with the encoded video signal.

6. A method as claimed in any preceding claim, further comprising generating a code signal (CODE I.D.) identifying the parts of the encoded video signal that are rearranged, and transmitting at least a portion of the code signal with the encoded video signal.

7. A method of providing secure communication by means of a video signal, including a method as claimed in any preceding claim, and further comprising the steps of receiving the encoded video signal, delaying parts of the received video signal in relation to other parts of the received video signal to form a decoded video signal having parts rearranged in sequence relative to said encoded sequence in reverse of said determinable manner such that the decoded video signal has its parts arranged in said first predetermined sequence, and applying the decoded video signal to a video receiver.

8. Apparatus for providing secure transmission of a video signal comprising means for generating a video signal having a plurality of parts arranged in a first predetermined sequence, first storage means (140) for sequentially storing parts of the video signal; means (144, 148; 152; 154) for retrieving the stored parts in a sequence other than said first predetermined sequence to form an encoded video signal having parts rearranged in sequence relative to said first predetermined sequence in a determinable manner; and means (254) for transmitting the encoded video signal, characterised in that the apparatus further comprises second storage means (144) for sequentially storing the stored parts, means (142, 152) for simultaneously transferring the stored parts in said first storage means (140) to said second storage means (144), and means (148; 150; 154) for retrieving the stored parts from said second storage means (144).

9. Apparatus as claimed in Claim 8, wherein said means for transferring the stored parts from said first storage means (140) to said second storage means (144) comprises gating means (152) for rearranging the sequence of the stored parts during transfer to said second storage means (144), and wherein said retrieving means (148, 150) retrieve the stored parts from said second storage means (144) in sequence.

10. Apparatus as claimed in Claim 8, wherein said means (142) for transferring the stored parts from said first storage means (140) to said second storage means (144) is arranged to transfer the stored parts in sequence, and wherein said retrieving means (154) is arranged to retrieve the stored parts from said second storage means (144) in a selectively variable sequence.

11. Apparatus as claimed in any of Claims 8 to 10, further comprising means (210; 228) for generating a code signal identifying the manner in which the parts of said encoded video signal are rearranged in relation to said first predetermined sequence, and means (254) for transmitting the code signal with the encoded video signal.

**Patentansprüche**

1. Ein Verfahren, das sichere Übertragung eines Videosignals mit einer Mehrzahl von in einer ersten vorbestimmten Folge angeordneten Teilen bedingt und das die Schritte sequentieller Speicherung von Teilen des Videosignals an einem ersten Speicherplatz (140), die Wiedergewinnung der gespeicherten Teile in einer Folge, die anders ist als die besagte erste vorbestimmte Folge, um ein codiertes Videosignal zu bilden, dessen Teile in einer zu der besagten ersten vorbestimmten Folge relativen Folge auf bestimmbare Weise umgeordnet sind, und Übertragung des codierten Videosignals umfaßt, dadurch gekennzeichnet, daß die gespeicherten Teile gleichzeitig an einen zweiten Speicherplatz (144) übertragen und daß die gespeicherten Teile von dem besagten zweiten Speicherplatz (144) wiedergewonnen werden.

2. Ein Verfahren im Einklang mit Anspruch 1, bei dem die Folge der gespeicherten Teile durch Übertragen der gespeicherten Teile von dem ersten Speicherplatz (140) an den besagten zweiten Speicherplatz (144) umgeordnet wird und zwar so, daß die Folge der gespeicherten Teile in dem besagten zweiten Speicherplatz (144) sich auf wählbare Weise von der Folge der gespeicherten Teile in dem besagten ersten Speicherplatz (140) unterscheidet, und bei dem die gespeicherten Teile in Folge von dem zweiten Speicherplatz (144) wiedergewonnen werden.

3. Ein Verfahren im Einklang mit Anspruch 1, bei dem die Folge der gespeicherten Teile dadurch umgeordnet wird, daß die gespeicherten Teile von dem ersten Speicherplatz (140) in der besagten ersten

# 0 046 798

vorbestimmten Folge an den zweiten Speicherplatz (144) übertragen und dann in einer wählbar variablen Folge von dem zweiten Speicherplatz (144) wiedergewonnen werden.

4. Ein Verfahren im Einklang mit Anspruch 1, bei dem die Folge der Teile des Videosignals durch Speichern der Teile an dem besagten Speicherplatz (140) in einer wählbar variablen Folge, die anders ist als die besagte erste vorbestimmte Folge, umgeordnet wird.

5. Ein Verfahren im Einklang mit einem der vorstehenden Ansprüche, das sich des weiteren auf die Erzeugung eines Codesignals (CODE I.D.) erstreckt, das die Art und Weise, auf die die Teile des besagten codierten Videosignals im Verhältnis zu der besagten ersten vorbestimmten Folge umgeordnet werden, bezeichnet, sowie auf die Übertragung von mindestens einem Teil des Codesignals mit dem codierten Videosignal.

6. Ein Verfahren im Einklang mit einem der vorstehenden Ansprüche, das sich des weiteren auf die Erzeugung eines Codesignals (CODE I.D.) erstreckt, das die umgeordneten Teile des codierten Videosignals bezeichnet, sowie auf die Übertragung von mindestens einem Teil des Codesignals mit dem codierten Videosignal.

7. Ein Verfahren, das sichere Kommunikation mit Hilfe eines Videosignals bedingt, einschließlich eines Verfahrens im Einklang mit einem der vorstehenden Ansprüche, und das sich des weiteren auf die Schritte des Empfangs des codierten Videosignals erstreckt, sowie auf die Verzögerung von Teilen des empfangenen Videosignals im Verhältnis zu anderen Teilen des empfangenen Videosignals, um ein decodiertes Videosignal zu bilden, dessen Teile in einer zu der besagten codierten Folge relativen Folge umgekehrt wie auf die besagte bestimmbare Weise umgeordnet sind, und zwar so, daß die Teile des codierten Videosignals der besagten ersten vorbestimmten Folge angeordnet werden, sowie auf die Zuleitung des codierten Videosignals zu einem Videoempfänger.

8. Ein Gerät, das sichere Übertragung eines Videosignals bedingt, mit einem Mittel zur Erzeugung eines Videosignals mit einer Mehrzahl von in einer ersten vorbestimmten Folge angeordneten Teilen, einem ersten Speichermittel (140) für sequentielle Speicherung von Teilen des Videosignals, Mitteln (144, 148; 152; 154) zur Wiedergewinnung der gespeicherten Teile in einer anderen als der besagten ersten vorbestimmten Folge, um ein codiertes Videosignal zu bilden, dessen Teile in einer zu der besagten ersten vorbestimmten Folge relativen Folge auf bestimmbare Weise umgeordnet werden, und Mitteln (254) zur Übertragung des codierten Videosignals, dadurch gekennzeichnet, daß das Gerät des weiteren ein zweites Speichermittel (144) für sequentielle Speicherung der gespeicherten Teile umfaßt, sowie Mittel (142, 152) für gleichzeitige Übertragung der gespeicherten Teile in dem besagten ersten Speichermittel (140) an das besagte zweite Speichermittel (144) und Mittel (148; 150; 154) zur Wiedergewinnung der gespeicherten Teile von dem besagten zweiten Speichermittel (144).

9. Ein Gerät im Einklang mit Anspruch 8, bei dem das besagte Mittel zur Übertragung der gespeicherten Teile von dem besagten ersten Speichermittel (140) an das besagte zweite Speichermittel (144) ein Schaltmittel (152) zur Umordnung der Folge der gespeicherten Teile während der Übertragung an das besagte zweite Speichermittel (144) umfaßt, und bei dem die besagten Wiedergewinnungsmittel (148, 150) die gespeicherten Teile von dem besagten Speichermittel (144) in Folge wiedergewinnen.

10. Ein Gerät im Einklang mit Anspruch 8, bei dem das besagte Mittel (142) zur Übertragung der gespeicherten Teile von dem besagten ersten Speichermittel (140) an das besagte zweite Speichermittel (144) so angeordnet ist, daß die gespeicherten Teile in Folge übertragen werden, und bei dem das besagte Wiedergewinnungsmittel (154) so angeordnet ist, daß die gespeicherten Teile in einer wahlweise variablen Folge von dem besagten zweiten Speichermittel (144) wiedergewonnen werden.

11. Ein Gerät im Einklang mit einem der Ansprüche 8 bis 10, das des weiteren Mittel (210; 228) zur Erzeugung eines Codesignals umfaßt, das die Art und Weise bezeichnet, auf die die Teile des besagten codierten Videosignals im Verhältnis zu der besagten ersten vorbestimmten Folge umgeordnet werden, sowie Mittel (254) zur Übertragung des Codesignals mit dem codierten Videosignal.

**Revendications**

1. Une méthode de transmission en toute sécurité d'un signal vidéo comportant une pluralité de composants disposés dans une première séquence prédéterminée et comportant les échelons de composants rangés par ordre séquentiel sur ce signal vidéo dans un premier emplacement de mémorisation (140), avec saisie des composants mémorisés, dans un ordre séquentiel différent de la première séquence prédéterminée afin de former un signal vidéo codé dont tous les composants sont redisposés de manière déterminable suivant une séquence définie par rapport à la première séquence prédéterminée, avec transmission de ce signal vidéo codé qui se caractérise par le fait que les composants mémorisés sont transférés simultanément à un deuxième emplacement de mémoire (144) et par le fait que les composants mémorisés sont saisis à partir de ce deuxième emplacement de mémoire (144).

2. Une méthode, selon la revendication 1, dans laquelle la séquence des composants mémorisés est redistribuée en transférant ces composants mémorisés du premier emplacement de mémoire (140) au deuxième emplacement de mémoire (144) de telle sorte que la séquence des composants mémorisés dans ce deuxième emplacement (144) diffère, d'une manière sélectionnable, de la séquence des composants mémorisés dans le premier emplacement (140) et dans laquelle les composants mémorisés sont saisis, séquentiellement, dans ce deuxième emplacement de mémoire (144).

11

3. Une méthode, selon la revendication 1, dans laquelle la séquence des composants mémorisés est redistribuée en transférant ces composants mémorisés du premier emplacement de mémoire (140) au deuxième emplacement de mémoire (144) suivant la première séquence prédéterminée, avec ensuite saisie des composants mémorisés depuis le deuxième emplacement de mémoire (144) suivant une séquence variable au choix.

4. Une méthode, selon la revendication 1, dans laquelle la séquence des composants du signal vidéo est redistribuée par une mémorisation de ces composants dans le premier emplacement de mémoire (140) suivant une séquence variable au choix et différente de la première séquence prédéterminée.

5. Une méthode, selon les revendications précédentes, qui comporte également la génération d'un signal codé (CODE I.D.) qui identifie la manière de redistribuer les composants dudit signal vidéo codé par rapport à la première séquence prédéterminée, avec transmission d'au moins une partie du signal codé avec le signal vidéo codé.

6. Une méthode, selon les revendications précédentes, qui comporte également la génération d'un signal codé (CODE I.D.) qui identifie les composants du signal vidéo codé qui sont redistribués, avec transmission d'au moins une partie du signal codé avec le signal vidéo codé.

7. Une méthode qui assure un moyen de communication sûr par l'intermédiaire d'un signal vidéo, selon une méthode décrite dans les revendications précédentes, et qui comporte également les phases de réception du signal vidéo codé, de temporisation des composants du signal vidéo reçu par rapport à d'autres composants du signal vidéo reçu afin de former un signal vidéo décodé dont les composants sont redistribués suivant une séquence relative par rapport à la séquence codée, dans l'ordre inverse de la procédure déterminable de redistribution des composants du signal vidéo codé lors de la première séquence prédéterminée, avec envoi du signal vidéo décodé à un récepteur vidéo.

8. L'appareillage qui fournit une transmission sûre d'un signal vidéo, avec moyen de génération d'un signal vidéo dont une pluralité des composants sont distribués suivant la première séquence prédéterminée; le dispositif de première mémorisation (140) qui permet de mémoriser dans un ordre séquentiel les composants du signal video; les dispositifs (144, 148; 152; 154) qui permettent de saisir les composants mémorisés suivant une séquence différente de la première séquence prédéterminée afin de former un signal vidéo codé dont les composants sont redistribués suivant une séquence déterminable par rapport à la première séquence prédéterminée; et un dispositif (254) pour transmettre le signal vidéo codé et se caractérisant par le fait qu'il comporte également un deuxième dispositif de mémorisation (144) pour la mémorisation séquentielle des composants mémorisés; des dispositifs (142, 152) pour le transfert simultané des composants mémorisés dans le premier dispositif de mémorisation (140) sur le deuxième dispositif de mémorisation (144); et des dispositifs (148; 150; 154) pour saisir les composants mémorisés depuis le deuxième dispositif de mémorisation (144).

9. L'appareillage, selon la revendication 8, comporte un dispositif de transfert des composants mémorisés du premier dispositif de mémorisation (140) vers le deuxième dispositif de mémorisation (144) avec des dispositifs à porte (152) permettant de redistribuer la séquence des composants mémorisés pendant le transfer vers le deuxième dispositif de mémorisation (144) et comportant des dispositifs de saisie (148, 150) qui permettent de saisir les composants mémorisés depuis le deuxième dispositif de mémorisation (144), dans un order séquentiel.

10. L'appareillage, selon la revendication 8, comportant un dispositif (142) pour le transfert des composants mémorisés du premier dispositif de mémorisation (140) vers le deuxième dispositif de mémorisation (144) suivant un agencement de transfert séquentiel des composants mémorisés, et comportant un dispositif de saisie (154) à agencement spécifique pour saisir les composants mémorisés du deuxième dispositif de mémorisation (144) suivant une séquence variable au choix.

11. L'appareillage, selon les revendications 8 à 10, comportant en outre des dispositifs (210; 228) de génération d'un signal codé identifiant le mode de redistribution des composants du signal vidéo codé, par rapport à la première séquence prédéterminée et un dispositif (254) de transmission du signal codé avec le signal vidéo codé.

**FIG IA.**

EQUALIZING PULSE INTERVAL
VERT. SYNC. PULSE INTERVAL
EQUALIZING PULSE INTERVAL

FIELD 1 LINE NUMBERS

TIME →

FIELD 2 LINE NUMBERS

HORIZONTAL SYNC. PULSES

MAX. CARRIER VOLTAGE
BLANKING LEVEL
REFERENCE BLACK LEVEL
REFERENCE WHITE LEVEL
ZERO CARRIER

SYNC

PICTURE
HORIZONTAL BLANKING

VERTICAL BLANKING
BOTTOM OF PICTURE
START OF FIELD 1

TOP OF PICTURE

START OF FIELD 2

FIG. 1B

**FIG IB**

HORIZONTAL SYNC.
BLANKING LEVEL
REAR SLOPE OF VERTICAL BLANKING
REFERENCE WHITE LEVEL
ZERO CARRIER

FRONT PORCH
COLOR BURST
BACK PORCH
0.10H MAX.
1/10 OF MAX. BLANKING

0 046 798

# FIG IC

TOP

FIELD 1

LEFT

RIGHT

L22 L23
L24 L25
L26 L27

L26 L261
L262 L262½

BOTTOM

# FIG ID

FIELD 2

L22½ L23
L24 L25

L261 L262
L263

# FIG 2

# FIG 3

# FIG 4

**FIG 5**

FIELD 3

L22
L23
L24

L262
L262½

FIELD 1

L22
L23
L24

L262
L262½

FIELD 2

L22½
L23
L24

L262
L263

## FIG 6A

## FIG 6B

## FIG 6C

FIG 7

SYNC

146 DELAY

NORMAL
TV VIDEO

142

CLOCK

ENCODE
CONTROL — 148

RST    SERIAL IN/PARALLEL OUT
       STORAGE DEVICE                140

D

C
O1  O2  O3                           O256

S256  S255  S254  — — —              SI

D1  D2  D3    PARALLEL IN/SERIAL OUT
              STORAGE DEVICE          144

PE
CL
FWD/RVS

OL                                   O256

150

ENCODED
VIDEO

CODE I D                             CODE I.D.

FIG 8

FIG 9

## FIG 10

## FIG 11

# FIG 12

**TELEVISION TRANSMITTER STATION**

SYNC & BLANKING HOR. & VERT.

NORMAL TV VIDEO

VIDEO ENCODER 250

ENCODED VIDEO (WITH CODE I.D.)

MULTIPLEXER 252

TRANSMITTER 254

**SUBSCRIBER DECODER**

RECEIVER (DEMODULATOR) 256

SYNC & CODE I.D. DETECTOR 258

SYNC & BLANKING

SYNC

CODE I.D.

VIDEO DECODER 260

DECODED VIDEO

MULTIPLEXER

MODULATOR

TV RECEIVER ANTENNA TERMINALS

0 046 798